# EUROPÄISCHE PATENTSCHRIFT

(11) **EP 1 323 739 B1**
(45) Veröffentlichungstag und Bekanntmachung des Hinweises auf die Patenterteilung: **11.01.2006**
(21) Anmeldenummer: 02024791.2
(22) Anmeldetag: 07.11.2002
(51) Int. Cl.: C08C 19/06

(54) **Verfahren zur Herstellung epoxidierter Polyalkenylene**
Preparation of epoxidized polyalkenylenes
Préparation de polyalkenylènes époxidés

(30) Priorität: 22.12.2001 DE 10163783
(43) Veröffentlichungstag der Anmeldung: 02.07.2003
(73) Patentinhaber: Degussa AG, 40474 Düsseldorf (DE)
(72) Erfinder: Scholz, Peter, Dr., 07778 Lehesten (DE); Ondruschka, Bernd, Prof. Dr., 04109 Leipzig (DE); Denkinger, Peter, Dr., 48301 Nottuln (DE); Freitag, Werner, Dr,, Morristown, NJ 07960 (US); Ortelt, Martina, Dr., 48249 Dülmen (DE); Andrejewski, Werner, 46284 Dorsten (DE); Berlineanu, Andreas, Dr., 04157 Leipzig (DE)

(56) Entgegenhaltungen:
- US-A- 3 022 322
- US-A- 4 780 507
- WHEELOCK CH. E.: "Epoxidation of liquid polybutadiene" JOURNAL OF INDUSTRIAL AND ENGINEERING CHEMISTRY, Bd. 50, Nr. 3, 1958, Seiten 299-304, XP009021926

## Beschreibung

Die Erfindung betrifft ein im Wesentlichen lösemittelfreies, umweltverträgliches Verfahren zur Herstellung hochwertiger epoxidierter Polyalkenylene und Verwendung von Phosphonsäuren und deren Derivaten als Katalysator.

Bekannte Verfahren leiden darunter, dass im Zuge der Epoxidierung bzw. in der Aufarbeitung organische Lösungsmittel, die oftmals aromatisch und/oder halongenhaltig sind, Verwendung finden. Diese sind dann nur schwer vom Polymeren abzutrennen; bzw. eine Reihe von Nebenprodukten, die bei der Epoxidierung entstehen, sind in diesen Lösungsmitteln schlecht löslich und können im Polymeren verbleiben. Um dies zu minimieren, schließt sich in bekannten Verfahren ein zusätzlicher Extraktionsschritt mit Wasser oder Lösemittel/Wassergemischen, der sehr oft mehrstufig ist, an. Die darauf folgende Abtrennung der organischen von der wässrigen Phase ist ein zusätzlicher Verfahrensschritt.

Epoxidierte Polyalkenylene finden in der Praxis eine vielfältige Anwendungsbreite insbesondere als Mittel zur Oberflächenveredelung und -versiegelung, Hydrophobierung und zur Verfestigung von Compounds.

Da Polyalkenylene zur Gruppe olefinischer Polymere zählen, ist die Addition eines Epoxidsauerstoffes an die Doppelbindung im Sinne der Prileshaev-Reaktion lange bekannter Stand der Technik. Die dazu verwendeten Carbonsäuren Ameisensäure, Essigsäure (DE-OS 25 54 093, US 4,309,516) Benzoe- oder Propionsäure (DE-OS 32 38 886) verbleiben nach Isolierung des Produkes z. T. in den epoxidierten Polymeren oder müssen durch sehr aufwendige Reinigungsverfahren entfernt werden. Zusätzlich muss danach das organsiche Lösungsmittel noch von Wasser abgetrennt werden. In DE-OS 35 28 007 ist ein Verfahren beschrieben, in dem sich an den mittels Perpropionsäure durchgeführten Epoxidierungsschritt in Benzol dreizehn Wasch- und Destillationsstufen zur Entfernung der Carbonsäure und des Lösemittels anschließen. Bei der guten Löslichkeit von Benzol im Polyalkenylen ist außerdem anzunehmen, dass ein Anteil von Benzol im Produkt verbleibt. Andere Verfahren (FR 2 320 972, DE-OS 25 42 709) verwenden Monoperphthalsäure, die anschließend dur zeit- und lösungsmittelaufwendige Filtration abgetrennt wird, obwohl anzunehmen ist, da aufgrund einer gewissen Löslichkeit im epoxidierten. Polymeren trotz des grossen Aufwands eine vollständige Abtrennung der Säure nicht gelingt.

Andere übergangsmetallkatalysierte Epoxidationen leiden darunter, dass die Katalysatore schwer herzustellen und kostenaufwendig sind (J. Polym. Sci., Part C: Poly Lett. 1990, 28, 285; Polym. Chem. 1991, 29, 547) bzw. deren Einsatz nur unter aufwendigen technologische Bedingungen (Phasentransferkatalyse WO 9 828 338) möglich ist. An diese schließt sich ebenfalls wieder die Abtrennung der organischen Lösungsmittel an.

In DE-OS 32 38 886 wird die Epoxidierung von konjugierten Diolefinpolymeren und Pflanzenölen in Lösemitteln (Beispiele) beschrieben, obwohl dies nicht Gegenstand der Erfindung ist. Selbst wenn der Epoxidierungsschritt, in Wasser gelingen sollte, kommt die nachfolgende Extraktion nicht ohne ein zusätzliches Lösemittel (Isopropanol) aus.

Aufgabe war es, ein im Wesentlichen lösemittelfreies Epoxidierungsverfahren zu finden, welches den Einsatz umweltschädigender Lösemittel in allen Prozessstufen vermeidet und somit im Waschaufwand minimiert ist und ein hochwertiges Produkt liefert.

Aufgabe der Erfindung war es auch, besonders effektive Katalysatoren für den Einsatz in Epoxidierungsverfahren zu finden.

Gegenstand der Erfindung ist ein Verfahren zur Herstellung epoxidierter Polyalkenylene, die eine zahlenmittlere Molmasse zwischen 500 und 50 000 g/mol und einen Epoxidsauerstoffgehalt zwischen 1 und 25 Masseprozent aufweisen, durch Umsetzung mit 15 bis 90%igem Wasserstoffperoxid und Carbonsäuren mit 1 bis 3 Kohlenstoffatomen in Gegenwart von Phosphonsäuren und/oder deren Derivate als Katalysator und ohne weitere Zugabe von organischen Lösemitteln und ohne weitere Zugabe von wasser.

Das erfindungsgemäße Verfahren löst die o. g. Nachteile bestehender Prozesse, indem die Epoxidierung ohne Verwendung von Lösemitteln geschieht. Bei der anschließenden Aufarbeitung der Produkte kann vorteilhaft als Extraktionsmittel ausschließlich Wasser verwendet werden. Es wurde gefunden, dass beim Einsatz von kurzkettigen Carbonsäuren (C₁-C₃) keine freien Carbonsäuren im epoxidierten Produkt verbleiben, die eine unkontrollierte Vernetzung des epoxidierten Polyalkylens bewirken können. Die für das Verfahren als Katalysator verwendeten Stoffe sind überraschenderweise sehr aktiv und effektiv, schwer in den Polymeren und sehr gut in Wasser löslich. Sie lassen sich daher sehr einfach aus dem Reaktionsgemisch abtrennen. Bevorzugt wird das Verfahren in Gegenwart von Aminophosphonsäuren als Katalysatoren durchgeführt.

Überraschend wurde ebenfalls gerunden, dass sich die Phosphonsäure und deren Derivate, ganz besonders die Aminophosphonsäuren, als Katalysatoren bei der Herstellung von Epoxidierungsprodukten aus Polyalkenylenen eignen.

Gegenstand der Erfindung ist somit auch die Verwendung von Aminophosphonsäuren und/oder deren Derivate und/oder Derivate von Phosphonsäuren als Katalysatoren bei der Lösemittelfreien Herstellung von Epoxidierungsprodukten aus Polyalkenylenen. Besonders bevorzugt sind Aminophosphonsäuren, wie sie weiter unten näher spezifiziert werden. Prinzipiell können die Katalysatoren in Lösemittel haltigen und freien Verfahren eingesetzt werden und es ist auch unerheblich, ob organische Persäure direkt oder in situ erzeugt, eingesetzt wird. Bevorzugt sind C₁-C₃-Carbonsäuren, wie Ameisen-, Essig- und/oder Propionsäure.

Besonders bevorzugt werden die Katalysatoren bei Verfahren eingesetzt, die im Wesentlichen oder ganz Lösemittel frei durchgeführt werden.

Als Einsatzstoffe geeignete Polyalkenylene werden bevorzugt Polymere auf Basis von Butadien-1.3, Isopren, 2,3-Dimethylbutadien-1.3 und Chloropren verwendet. Es können Homo- oder auch Copolymerisate der o. g. Monomere eingesetzt werden, bevorzugt sind aber Homopolymere, vor allem die des Butadien-1.3. Die Polyalkenylene können 1,4- oder 1,2-verknüpft sein. Es können aber ebenso Gemische aus 1,2- und 1,4-Verknüpfungen vorliegen, wobei die 1,4-Verknüpfung sowohl cis- als auch trans-Anordnungen einnehmen kann. Ganz besonders bevorzugt wird ein Polybutadien mit ca. 75 % 1,4-cis-, ca. 24% 1,4-trans- und ca. 1 % 1,2-Doppelbindungen eingesetzt (Polyöl Degussa).

Des Weiteren können auch Polyalkenylene eingesetzt werden, die aus mindestens einem der o. g. monomeren Diene und einer oder mehreren Vinylverbindungen und/oder Alkenen aufgebaut sind. Geeignete Vinylverbindungen sind z. B. Styrole oder substituierte Styrole, Vinylether bzw. Acrylsäure- oder Methacrylsäureester. Geeignete Alkene sind z. B. Ethen, Propen, Buten oder iso-Buten.

Als Carbonsäuren werden Ameisen-, Essig- oder Propionsäure allein oder in Mischungen eingesetzt.

Als Katalysatoren werden Phosphonsäure und/oder deren Derivate eingesetzt. Besonders geeignet sind Aminophosphonsäuren, wie beispielsweise Aminotrismethylen-phosphonsäure (ATMP) (6419-19-8), Aminotris(1-methyl-2,1-ethandiyl)-phosphonsäure (107559-74-0), [Aminotris(1-methylethyliden)]tris-phosphonsäure (29557-57-1), [[(Phosphonomethyl)imino] di-2,1-ethandiyl]bis-phosphonsäure (220659-04-1), Aminotrisethylidenphosphonsäure (24573-69-1), [1-[bis(phosphonomethyl)amino]ethyl-phosphonsäure (45203-32-5), Aminotrispropylidenphosphonsäure (45265-40-5), [[(2-Phosphono- ethyl)imino]bis(methylen)]bis-phosphonsäure (68593-88-4), [1,2-Ethandiylbis[aminobis(methylen)]]tetrakis-phosphonsäure (1429-50-1), [1,3-Propandiylbis[aminobis(methylen)]]tetrakis-phosphonsäure (28444-52-2), N2,N2,N5,N5-Tetrakis(phosphonomethyl)-ornithin (193553-86-5), [Methylenbis[aminobis (methylen)]]tetrakis-phosphonsäure (70235-52-8). Auch Mischungen jeglicher Art sind geeignet (CA Registriernummern). Die Menge der eingesetzten Katalysatoren kann von 0,05 bis 500 mmol, bezogen auf 1 mol Polyalkenylen, variieren.

Gegenstand der Erfindung ist auch die Verwendung der erfindungsgemäß hergestellten epoxidierten Polyalkenylene als Reaktivpartner für Polymer analoge Umsetzungen und als Einsatzstoff in vernetzenden Systemen. Sie werden erfindungsgemäß eingesetzt zur Herstellung von Bindemitteln, Klebstoffen, Dichmassen, Beschichtungsstoffen und Weichmachern, insbesondere zur Herstellung von Lacken, Druckfarben, Druckplatten, Antidrühnmassen.

Durch die folgenden Beispiele wird die Erfindung näher erläutert.

### Beispiele

### Beispiel 1

| | |
|---|---|
| 600 g Polyöl 110 Degussa | 0,333 mol |
| 60 ml H₂O₂ (67 %) | 1,312 mol |
| 12,76 ml 85 % HCOOH | 0,574 mol |
| 0,188 g ATMP | 0,628 mmol |

600 g Polyöl werden in einem Sulfierkolben der mit Thermometer, Rührer, Rückflusskühler und Tropftrichter versehen ist, vorgesehen. Das Gemisch wird auf 40 °C erwärmt und die gesamte Menge an Wasserstoffperoxid zugegeben. 6 ml Ameisensäure und 0,188 g ATMP werden unter starkem Rühren zugegeben und 30 Min. gerührt. Danach wird die restliche Menge an Ameisensäure (6,8 ml) zugegeben, wobei sich die Mischung um 2 °C erwärmt. Danach wird die Mischung innerhalb 90 Min. auf 55°C erwärmt und weitere 5 h bei 55 °C belassen. Anschließend wird das Produkt über Nacht stehen gelassen. Danach wird das epoxidierte Polymer 2mal mit 500 ml Wasser, einmal mit 500 ml 10%igem Natriumhydrogencarbonat und anschließend noch dreimal mit 500 ml Wasser gewaschen. Die Wäsche erfolgt jeweils durch Zugabe von Wasser in den Sulfierkolben, dann wird 30 Min. kräftig gerührt und die Phasentrennung abgewartet. Die wässrige Phase wird jeweils durch Absaugen mittels eines Steigrohres von der Polymerphase getrennt.

Das Polymer wird am Rotationsverdampfer bei 10 mbar und 50 °C getrocknet. Der Epoxidsauerstoffgehalt im Polymeren beträgt 3,5 Masseprozent.

### Beispiel 2

| | |
|---|---|
| 600 g Polyöl 110 Degussa | 0,333 mol |
| 220 ml H₂O₂ (30 %) | 2,0 mol |
| 12,76 ml 85 % HCOOH | 0,574mol |
| 0,188 g ATMP | 0,628mmol |

600 g Polyöl werden in einem Sulfierkolben der mit Thermometer, Rührer, Rückflusskühler und Tropftrichter versehen ist, vorgelegt. Das Gemisch wird auf 40 °C erwärmt und die gesamte Menge an Wasserstoffperoxid zugegeben. 6 ml Ameisensäure und 0,188 g ATMP werden unter starkem Rühren zugegeben und 30 Min. gerührt. Danach wird die restliche Menge an Ameisensäure (6,8 ml) zugegeben, wobei sich die Mischung um 2 °C erwärmt. Danach wird die Mischung innerhalb 90 Min. auf 55 °C erwärmt und weitere 5 h bei 55 °C belassen. Anschließend wird das Produkt über Nacht stehen gelassen. Danach wird das epoxidierte Polymer 2mal mit 500 ml Wasser, einmal mit 500 ml 10%igem Natriumhydrogencarbonat und anschließend noch dreimal mit 500 ml Wasser gewaschen. Die Wäsche erfolgte jeweils durch Zugabe von Wasser in den Sulfierkolben, dann wird 30 Min. kräftig gerührt und die Phasentrennung abgewartet. Die wässrige Phase wird jeweils durch Absaugen mittels eines Steigrühres von der Polymerphase getrennt.

Das Polymere wird am Rotationsverdampfer bei 10 mbar und 50 °C getrocknet. Der Epoxidsauerstoffgehalt im Polymeren beträgt 3,4 Masseprozent.

### Beispiel 3

| | |
|---|---|
| 700 g Polyöl 110 Degussa | 0,389mol |
| 133 g H₂O₂ (50 %) | 2,35 mol |
| 25 ml 85 % HCOOH | 1,12 mol |
| 0,5 g ATMP | 1,67 mmol |

700 g Polyöl werden in einem Sulfierkolben der mit Thermometer, Rührer, Rückflusskühler und Tropftrichter versehen ist, vorgelegt. Das Gemisch wird auf 45 °C erwärmt und die gesamte Menge an Wasserstoffperoxid zugegeben. 3 ml Ameisensäure und 0,5 g ATMP werden unter starkem Rühren zugegeben und 20 Min. gerührt. Danach wird die restliche Menge an Ameisensäure innerhalb von 4 h in Portionen von jeweils 2 ml zugegeben, wobei sich die Mischung auf 60 °C erwärmt. Danach wird die Mischung eine Stunde bei 55 °C belassen. Anschließend wird das Produkt über Nacht stehen gelassen. Danach wird das epoxidierte Polymere 2mal mit 500 ml Wasser, einmal mit 500 ml 10%igem Natriumhydrogencarbonat und anschließend noch dreimal mit 500 ml Wasser gewaschen. Die Wäsche erfolgte jeweils durch Zugabe von Wasser in den Sulfierkolben, dann wird 30 Min. kräftig gerührt und die Phasentrennung abgewartet. Die wässrige Phase wird jeweils durch Absaugen mittels eines Steigrohres von der Polymerphase getrennt.

Das Polymere wird am Rotationsverdampfer bei 10 mbar und 50 °C getrocknet. Der Epoxidsauerstoffgehalt im Polymeren beträgt 5 Masseprozent.

### Beispiel 4

| | |
|---|---|
| 500 g Polyöl 110 Degussa | 0,278 mol |
| 176 ml H₂O₂ (50 %) | 3,1 mol |
| 32 ml 85 % HCOOH | 1,44 mol |
| 0,5 g ATMP | 1,67 mmol |

700 g Polyöl werden in einem Sulfierkolben der mit Thermometer, Rührer, Rückflusskühler und Tropftrichter versehen ist, vorgelegt. Das Gemisch wird auf 45 °C erwärmt und die gesamte Menge an Wasserstoffperoxid zugegeben. 4 ml Ameisensäure und 0,5 g ATMP werden unter starkem Rühren zugegeben und 20 Min. gerührt. Danach wird die restliche Menge an Ameisensäure innerhalb von 4 h in Portionen von jeweils 2 ml zugegeben, wobei sich die Mischung auf 60 °C erwärmt. Danach wird die Mischung eine Stunde bei 55 °C belassen. Anschließend wird das Produkt über Nacht stehen gelassen. Danach wird das epoxidierte Polymere 2mal mit 500 ml Wasser, einmal mit 500 ml 10%igem Natriumhydrogencarbonat und anschließend noch dreimal mit 500 ml Wasser gewaschen. Die Wäsche erfolgte jeweils durch Zugabe von Wasser in den Sulfierkolben, dann wird 30 Min. kräftig gerührt und die Phasentrennung abgewartet. Die wässrige Phase wird jeweils durch Absaugen mittels eines Steigrohres von der Polymerphase getrennt.

Das Polymere wird am Rotationsverdampfer bei 10 mbar und 50 °C getrocknet. Der Epoxidsauerstoffgehalt im Polymeren beträgt 8,5 Masseprozent.

Die in den vorstehenden Beispielen aufgeführten Rezepturen und Ergebnisse sind nicht auf die dort genannten Polymere und auch nicht auf die angegebenen Epoxidsauerstoffgehalte beschränkt.

## Patentansprüche

1. Verfahren zur Herstellung epoxidicrter Polyalkenylene, die eine zahlenmittlere Molmasse zwischen 500 und 50 000 g/mol und einen Epoxidsauerstoffgehait zwischen 1 und 25 Masseprozent aufweisen, durch Umsetzung mit 15 bis 90%igem Wasserstoffperoxid und Carbonsäuren mit 1 bis 3 Kohlenstoffatomen in Gegenwart von Phosphonsäuren und/oder deren Derivate als Katalysatoren und ohne weitere Zugabe von organischen Lösemitteln und ohne weitere Zugabe von Wasser.

2. Verfahren nach Anspruch 1,
**dadurch gekennzeichnet,**
**dass** die Umsetzung bei Temperaturen zwischen 10 und 100 °C durchgeführt wird.

3. Verfahren nach Anspruch 2,
**dadurch gekennzeichnet,**
**dass** die Umsetzung bei Temperaturen zwischen 20 und 60 °C durchgeführt wird.

4. Verfahren nach mindestens einem der Ansprüche 1 bis 3,
**dadurch gekennzeichnet, dass** als Derivate der Phosphonsäure
Aminophosphonsäuren eingesetzt werden.

5. Verfahren nach Anspruch 4,
**dadurch gekennzeichnet,**
**dass** als Aminophosphonsäure Aminotrismethylen-phosphonsäure (ATMP) (6419-19-8), Aminotris(1-methyl-2,1-ethandiyl)-phosphonsäure (107559-74-0), [Aminotris(1-methylethyliden)]tris-phosphonsäure (29557-57-1), [[(Phosphonomethyl)imino]di-2,1-ethandiyl]bis-phosphonsäure (220659-04-1), Aminotrisethylidenphosphonsäure (24573-69-1), [1-[bis(phosphonomethyl)amino]ethyl-phosphonsäure (45203-32-5), Aminotrispropylidenphosphonsäure (45265-40-5), [[(2-Phosphono- ethyl)imino]bis(methylen)]bis-phosphonsäure (68593-88-4), [1,2-Ethandiylbis[aminobis(methylen)]]tetrakis-phosphonsaure (1429-50-1), [1,3-Propandiylbis[aminobis(methylen)]]tetrakis-phosphonsäure (28444-52-2), N2,N2,N5,N5-Tetrakis(phosphonomethyl)-omithin (193553-86-5), [Methylcnbis[aminobis(methylen)]]tetrakis-phosphonsäure (70235-52-8), eingesetzt werden.

6. Verfahren nach mindestens einem der Ansprüche 1 bis 5,
**dadurch gekennzeichnet,**
**dass** als Carbonsäure Ameisensäure, Essigsäure und/oder Propionsäure eingesetzt wird.

7. Verfahren nach mindestens einem der Ansprüche 1 bis 6
**dadurch gekennzeichnet,**
**dass** Polyalkenylene mit 1,4-cis- und/oder 1,4-trans- und/oder 1,2-Verknüpfungen zur Epoxidierung eingesetzt werden.

8. Verfahren nach mindestens einem der Ansprüche 1 bis 7,
**dadurch gekennzeichnet,**
**dass** Polyalkenylene aus Butadien-1.3, Isopren, 2,3-Dimethylbutadien-1.3 und/oder Chloropren zur Epoxidierung eingesetzt werden.

9. Verfahren nach Anspruch 8,
**dadurch gekennzeichnet,**
**dass** ein Polybutadien mit 75 % 1,4-cis-, 24 % 1,4-trans- und 1 % 1,2-Doppelbindungen eingesetzt wird.

10. Verfahren nach mindestens einem der Ansprüche 1 bis 9
**dadurch gekennzeichnet,**
**dass** Polyalkenylene aus mindestens einem Dien und mindestens einem weiteren Comonomeren eingesetzt werden.

11. Verfahren nach Anspruch 10,
**dadurch gekennzeichnet,**
**dass** als Comonomere Vinylverbindungen und/oder Alkene eingesetzt werden.

12. Verfahren nach mindestens einem der Ansprüche 1 bis 11,
**dadurch gekennzeichnet,**
**dass** die Aufarbeitung der entstandenen epoxidierten Polyalkenylene im Wesentlichen in wässriger Phase erfolgt.

13. Verfahren nach mindestens einem der Ansprüche 1 bis 11,
**dadurch gekennzeichnet,**
**dass** die Aufarbeitung der entstandenen epoxidierten Polyalkenylene ausschließlich in wässriger Phase erfolgt.

14. Verwendung von Aminophosphonsäuren und/oder deren Derivate und/oder Derivate von Phosphonsäuren als Katalysatoren bei der lösemittelfreien Herstellung von Epoxidierungsprodukten aus Polyalkenylenen.

15. Verwendung nach Anspruch 14,
**dadurch gekennzeichnet,**
**dass** als Aminophosphonsäuren Aminotrismethylen-phosphonsäure (ATMP) (6419-19-8), Aminotris(1-methyl-2,1-ethandiyl)-phosphonsäure (107559-74-0), [Aminotris(1-methylethyliden)]tris-phosphonsäure (29557-57-1), [[(Phosphonamethyl)imino]di-2,1-ethandiyl]bis-phosphonsäure (20659-04-1), Aminotrisethylidenphosphonsäure (24573-69-1), [1-[bis(phosphonomethyl)amino]ethyl-phosphonsäure (45203-32-5), Aminotrispropyliden-phosphonsäure (45265-40-5), [[(2-Phosphono- ethyl)imino]bis(methylen)]bis-phosphonsäure (68593-88-4), [1,2-Ethandiylbis[aminobis(methylen)]]tetrakis-phosphonsäure (1429-50-1), [1,3-Propandiylbis[aminobis(methylen)]]tetrakis-phosphonsäure (28444-52-2), N2,N2,N5,N5-Tetrakis(phosphonomethyl)-ornithin (193553-86-5), [Methylenbis[aminobis(methylen)]]tetrakis-phosphonsäure (70235-52-8), eingesetzt werden.

## Claims

1. A process for preparing an epoxidized polyalkenylene having a number-average molar mass of from 500 to 50 000 g/mol and an epoxide oxygen content of from 1 to 25 per cent by mass by reacting from 15 to 90% strength hydrogen peroxide with a carboxylic acid having from 1 to 3 carbon atoms in the presence of a phosphonic acid and/or a derivative thereof as catalyst but without further addition of organic solvent and without further addition of water.

2. A process according to claim 1, **characterized in that** the reaction is carried out at a temperature from 10 to 100°C.

3. A process according to claim 2, **characterized in that** the reaction is carried out at a temperature from 20 to 60°C.

4. A process according to at least one of claims 1 to 3, **characterized in that** an aminophosphonic acid is used as derivative of phosphonic acid.

5. A process according to claim 4, **characterized in that** aminotrismethylenephosphonic acid (ATMP) (6419-19-8), aminotris(1-methyl-2,1-ethanediyl)phosphonic acid (107559-74-0), [aminotris(1-methylethylidene)]tris-phosphonic acid (29557-57-1), [[(phosphonomethyl)-imino]di-2,1-ethanediyl]bisphosphonic acid (220659-04-1), aminotrisethylidenephosphonic acid (24573-69-1), [1-[bis(phosphonomethyl)amino]ethyl]phosphonic acid (45203-32-5), aminotrispropylidenephosphonic acid (45265-40-5), [[(2-phosphoroethyl)imino]bis(methylene)]bisphosphonic acid (68593-88-4), [1,2-ethanediylbis[aminobis(methylene)]]tetrakisphosphonic acid (1429-50-1), [1,3-propanediylbis[aminobis(methylene)]]-tetrakisphosphonic acid (28444-52-2), N2,N2,N5,N5-tetrakis(phosphonomethyl)ornithine (193553-86-5) or [methylenebis[aminobis(methylene)]]tetrakisphosphonic acid (70235-52-8) is used as aminophosphonic acid.

6. A process according to at least one of claims 1 to 5, **characterized in that** formic acid, acetic acid and/or propionic acid is used as carboxylic acid.

7. A process according to at least one of claims 1 to 6, **characterized in that** a polyalkenylene having 1,4-cis and/or 1,4-trans and/or 1,2 linkages is used for the epoxidation.

8. A process according to at least one of claims 1 to 7, **characterized in that** a polyalkenylene formed from 1,3-butadiene, isoprene, 2,3-dimethyl-1,3-butadiene and/or chloroprene is used for the epoxidation.

9. A process according to claim 8, **characterized in that** a polybutadiene containing 75% 1,4-cis, 24% 1,4-trans, and 1% 1,2-double bonds is used.

10. A process according to at least one of claims 1 to 9, **characterized in that** a polyalkenylene formed from at least one diene and at least one further comonomer is used.

11. A process according to claim 10, **characterized in that** a vinyl compound and/or alkene is used as comonomer.

12. A process according to at least one of claims 1 to 13., **characterized in that** the resulting epoxidized polyalkenylene is worked up substantially in aqueous phase.

13. A process according to at least one of claims 1 to 11, **characterized in that** the resulting epoxidized polyalkenylene is worked up exclusively in aqueous phase.

14. The use of an aminophosphonic acid and/or a derivative thereof and/or a derivative of phosphonic acid as catalyst in the solvent-free preparation of an epoxidation product from a polyalkenylene.

15. The use according to claim 14, **characterized in that** aminotrismethylenephosphonic acid (ATMP) (6419-19-8), aminotris(1-methyl-2,1-ethanediyl)phosphonic acid (107559-74-0), [aminotris(1-methylethylidene)]trisphosphonic acid (29557-57-1), [[(phosphonomethyl)imino]di-2,1-ethanediyl]bisphosphonic acid (220659-04-1), aminotrisethylidenephosphonic acid (24573-69-1), [1-[bis-(phosphonomethyl)amino]ethyl]phosphonic acid (45203-32-5), aminotrispropylidenephosphonic acid (45265-40-5), [[(2-phosphonoethyl)imino]bis(methylene)]bisphosphonic acid. (68593-88-4), [1,2-ethanediylbis[aminobis-(methylene)]]tetrakisphosphonic acid (1429-50-1), [1,3-propanediylbis[aminobis(methylene)]]tetrakisphosphonic acid (28444-52-2), N2,N2,N5,N5-tetrakis(phosphonomethyl)ornithine (193553-86-5) or [methylenebis[amino-bis(methylene)]]tetrakisphosphonic acid (70235-52-8) is used as aminophosphonic acid.

## Revendications

1. Procédé de préparation de polyalcénylènes époxydés qui présentent une masse molaire moyenne comprise entre 500 et 50.000 g/mole et une teneur en oxygène époxyde comprise entre 1 et 25 % en masse, par conversion avec du peroxyde d'hydrogène à 15 à 90 % et des acides carboxyliques portant 1 à 3 atomes de carbone, en présence d'acides phosphoniques et/ou leurs dérivés en tant que catalyseurs, et sans autre addition de solvants organiques et sans autre addition d'eau.

2. Procédé selon la revendication 1,
**caractérisé en ce qu'**
on réalise la conversion à des températures comprises entre 10 et 100°C.

3. Procédé selon la revendication 2.
**caractérisé en ce qu'**
on réalise la conversion à des températures comprises entre 20 et 60°C.

4. Procédé selon au moins l'une quelconque des revendications 1 à 3,
**caractérisé en ce qu'**
on utilise des acides aminophosphoniques en tant que dérivés de l'acide phosphonique.

5. Procédé selon la revendication 4,
**caractérisé en ce que**
comme acide aminophosphonique, on utilise de l'acide aminotriméthylène-phosphonique (ATMP) (6419-19-8), de l'acide amlnotris(1-méthyl-2,1-éthandiyl)-phosphonique (107559-74-0), de l'acide [aminotris(1-méthyléthylidène)]tris-phosphonique (29557-57-1), de l'acide [[(phosphonométhyl)imino]di-2,1-éthandiyl]bis-phosphonique (220659-04-1), de l'acide aminotriséthylidène-phosphonique (24573-69-1), de l'acide. [1-[bis(phosphonométhyl)amino]éthyl-phosphonique (45203-32-5), de l'acide aminotrispropylidène-phosphenique (45285-40-5), de l'acide [[(2-phosphono-éthyl(imino]bis(méthylène)]bis-phosphonique (68593-88-4), de l'acide [1,2-éthandiylbis[aminobis(méthylène)]]tétrakis-phosphonique (1429-50-1), de l'acide [1,3-propandiylbis[aminobis(méthylène)]]tétrakis-phosphonique (28444-52-2), de la N2,N2,N5,N5-tétrakis(phosphonométhyl)-ornithine (193553-86-5), de l'acide [méthylène-bis[aminobis(méthylène)]]tétrakis-phosphonique (70235-52-8).

6. Procédé selon au moins l'une quelconque des revendications 1 à 5,
**caractérisé en ce que**
comme acide carboxylique, on utilise de l'acide formique, de l'acide acétique et/ou de l'acide propionique.

7. Procédé selon au moins l'une quelconque des revendications 1 à 6,
**caractérisé en ce qu'**
on utilise des polyalcénylènes comportant des liaisons 1,4-cis et/ou 1,4-trans et/ou 1,2 pour réaliser l'époxydation.

8. Procédé selon au moins l'une quelconque des revendications 1 à 7,
**caractérisé en ce qu'**
on utilise des polyalcénylènes constitués de butadiène-1,3, d'isoprène, de 2,3-diméthylbutadiène-1,3 et/ou de chloroprène pour réaliser l'époxydation.

9. Procédé selon la revendication 8,
**caractérisé en ce qu'**
on utilise un polybutadiène comportant 75 % de doubles liaisons 1,4-cis, 24 % de doubles liaisons 1,4-trans et 1 % de doubles liaisons 1,2.

10. Procédé selon au moins l'une quelconque des revendications 1 à 9,
**caractérisé en ce qu'**
on utilise des polyalcénylènes constitués d'au moins un diène et d'au moins un autre comonomère.

11. Procédé selon la revendication 10,
**caractérisé en ce que**
comme comonomères, on utilise des liaisons vinyle et/ou des alcènes.

12. Procédé selon au moins l'une quelconque des revendications 1 à 11.
**caractérisé en ce qu'**
on réalise la régénération des polyalcénylènes époxydés produits essentiellement dans la phase aqueuse.

13. Procédé selon au moins l'une quelconque des revendications 1 à 11,
**caractérisé en ce qu'**
on réalise la régénération des polyalcénylènes époxydés produits exclusivement dans la phase aqueuse.

14. Utilisation d'acides aminophosphoniques et/ou leurs dérivés et/ou dérivés d'acides phosphoniques en tant que catalyseurs dans la fabrication sans solvant de produits de l'époxydation provenant de polyalcénylènes.

15. Utilisation selon la revendication 14,
**caractérisée en ce que**
comme acides aminophosphoniques, on utilise de l'acide aminotriméthylène-phosphonique (ATMP) (6419-19-8), de l'acide aminotris(1-méthyl-2,1-éthandiyl)-phosphonique (107559-74-0), de l'acide [amino-tris(1-méthyléthylidène)]tris-phosphonique (29557-57-1), de l'acide [[(phosphonométhyl)imino]di-2,1-éthandiyl]bis-phosphonique (220659-04-1), de l'acide aminotriséthylidène-phosphonique (24573-69-1), de l'acide [1-[bis(phosphonométhyl)amino]éthyl-phosphonique (45203-32-5), de l'acide aminotrispropylidène-phosphonique (45265-40-5), de l'acide [[(2-phosphono-éthyl(imino]bis(méthylène)]bis-phosphonique (68593-88-4), de l'acide [1,2-éthandiylbis[aminobis(méthylène)]]tétrakis-phosphonique (1429-50-1), de l'acide [1,3-propandiylbis[aminobis(méthylène))]]tétrakis-phosphonique (28444-52-2), de la N2,N2,N5,N5-tétrakis(phosphonométhyl)-ornithine (193553-86-5), de l'acide [méthylène-bis[amino-bis(méthylène)]]têtrakis-phosphonique (70235-52-8).
